# EUROPEAN PATENT SPECIFICATION

(11) **EP 1 187 374 B1**
(45) Date of publication and mention of the grant of the patent: **01.02.2006**
(21) Application number: 01120809.7
(22) Date of filing: 29.08.2001
(51) Int. Cl.: H04B 10/158

(54) **Bit-rate-independent optical receiver**
Bitrate-unabhängiger optischer Empfänger
Récepteur optique à débit binaire independant

(30) Priority: 06.09.2000 KR 2000052682
(43) Date of publication of application: 13.03.2002
(73) Proprietor: SAMSUNG ELECTRONICS CO., LTD., Suwon-City, Kyungki-do (KR)
(72) Inventor: Kim, Sang-Ho, c/o Samsung Electronics Co.,Ltd., Suwon-city, 442-370, Kyungki-do (KR); Hwang,Seong-Taek, c/o Samsung Electronics Co.,Ltd., Suwon-city, 442-370, Kyungki-do (KR); Koh, Jun-Ho, c/o Samsung Electronics Co.,Ltd., Suwon-city, 442-370, Kyungki-do (KR); Oh, Yun-Je, c/o Samsung Electronics Co.,Ltd., Suwon-city, 442-370, Kyungki-do (KR)
(74) Representative: Grünecker, Kinkeldey, Stockmair & Schwanhäusser Anwaltssozietät

(56) References cited:
- EP-A- 0 878 926
- GB-A- 2 310 555
- JAE HO SONG ET AL: "DESIGN AND CHARACTERIZATION OF A 10 GB/S CLOCK AND DATA RECOVERY CIRCUIT IMPLEMENTED WITH PHASE-LOCKED LOOP" ETRI JOURNAL, ELECTRONICS AND TELECOMMUNICATIONS RESEARCH INSTITUTE, TAEJON, KR, vol. 21, no. 3, September 1999 (1999-09), pages 1-5, XP001029550 ISSN: 1225-6463

## Description

The present invention relates to an optical transmission system, and a bit-rate-independent optical receiver which operates independently of the bit rate of an input optical signal.

Generally, optical transmission systems use diverse protocols and diverse bit rates according to those protocols. For example, there are FDDI (Fiber Distributed Data Interface), ESCON (Enterprise Systems CONnectivity), optical fiber channel, gigabit Ethernet, and ATM (Asynchronous Transfer Mode), which may have diverse bit rates of, for example, 125 Mb/s, 155 Mb/s, 200 Mb/s, 622 Mb/s, 1,062 Mb/s, 1.25 Gb/s, and 2.5 Gb/s. For an optical transmission system, a protocol and a bit rate meeting the optical transmission system are appropriately selected from diverse protocols and diverse bit rates based on those protocols. Optical receivers employed in such an optical transmission system are designed so that they operate only in accordance with the protocol and bit rate previously set for the optical transmission system. Such optical receivers employed in optical transmission systems perform functions of converting an input optical signal into an electrical signal, and recovering noise-free original data from the electrical signal.

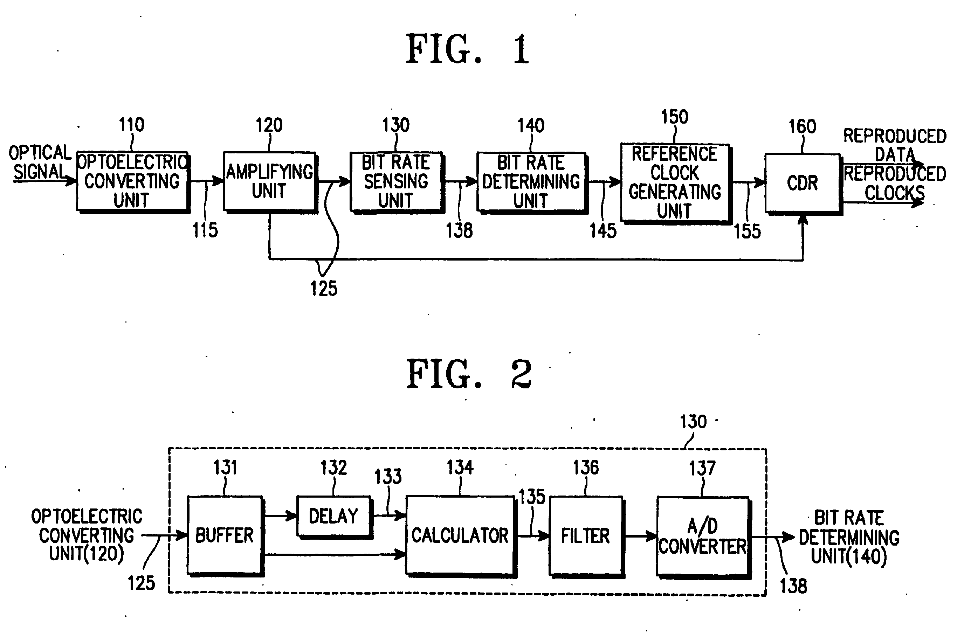

Fig. 1 is a block diagram illustrating a conventional bit-rate-independent optical receiver. As shown in Fig. 1, the optical receiver includes an optoelectric converting unit 110, an amplifying unit 120, a bit rate sensing unit 130, a bit rate determining unit 140, a reference clock generating unit 150, and a CDR (Clock and Data Recovery) 160.

The optoelectric converting unit 110 serves to optoelectrically convert an input optical signal into a signal to be outputted as a photosensitive signal 115. For the optoelectric converting unit 110, a photodiode may be typically used.

The amplifying unit 120 amplifies the photosensitive signal 115 outputted from the optoelectric converting unit 110, thereby outputting an amplified photosensitive signal 125. The amplified photosensitive signal 125 has a standardized voltage level. That is, the voltage level of the amplified photosensitive signal 125 is set to "1" at a maximum while being set to "0" at a minimum.

The bit rate sensing unit 130 generates an electrical signal with pulses proportional, in number, to the bit rate of the standardized photosensitive signal 125. The electrical signal is filtered, and then converted into a digital signal to be outputted as a bit rate sensing signal 138. The bit rate sensing signal 138 has a voltage level proportional to the bit rate of the photosensitive signal 125, that is, the input optical signal.

Fig. 2 is a block diagram illustrating the bit rate sensing unit 130. As shown in Fig. 2, the bit rate sensing unit 130 includes a buffer 131, a delay 132, an calculator 134, a filter 136, and an analog/digital (A/D) converter 137.

The buffer 131 distributes the photosensitive signal 125 received from the amplifying unit 120 to the delay 132 and calculator 134.

The delay 132 generates a delay signal 133 delayed from the photosensitive signal 125 by a desired time, and applies the delay signal 133 to the calculator 134.

The calculator 134 exclusively ORs the photosensitive signal 125, directly received from the buffer 131, with the delay signal 133 received from the delay 132, thereby outputting a recognition signal 135. The recognition signal 135 has the form of a number of pulses having a high level interval equal to the delay time of the delay 132. When the input photosensitive signal 125 varies in bit rate, the number of pulses in the recognition signal 135 is varied. The variation in the number of pulses in the recognition signal 135 is proportional to the bit rate of the photosensitive signal 125.

The filter 136 low-pass filters the recognition signal 135 received from the calculator 134, and then outputs the filtered signal. The A/D converter 137 converts the filtered signal, which has the form of an analog signal, into a digital signal to be outputted as a bit rate sensing signal 138.

Referring to Fig. 1 again, the bit rate determining unit 140 determines the bit rate of the photosensitive signal 125, based on the voltage level of the bit rate sensing signal 138, and outputs a clock correction signal 145 indicative of the determined bit rate.

The reference clock generating unit 150 generates a reference clock according to the clock correction signal 145. Based on the reference clock, the CDR 160 reproduces data and clocks of the photosensitive signal 125, and outputs the reproduced data and clocks.

However, the above mentioned conventional bit-rate-independent optical receiver has a configuration in which one bit rate sensing unit and one bit rate determining unit are allocated for each optical signal. For this reason, where the bit-rate-independent optical receiver is applied to an optoelectric cross-connect (OEXC) system receiving, as inputs thereof, a plurality of optical signals with different bit rates, it is difficult to individually manage a plurality of bit rate sensing units and a plurality of bit rate determining units. In other words, it is difficult to implement a centralized configuration for the bit-rate-independent optical receiver.

Furthermore, the conventional bit-rate-independent optical receiver has a problem in that it is difficult to modulize elements adapted to process signals and elements adapted to control those signal processing elements. For this reason, it is also difficult to achieve an addition or removal of signal processing elements.

EP-A-0 878 926 relates to an optical receiver which compensates for a phase variation due to a change in temperature. The optical receiver includes a light receiving device that converts input signal light into an electrical signal. An equalizing amplifier amplifies the electrical signal output from the light receiving device and performs waveform shaping. The optical receiver further includes a regenerating circuit that regenerates data from an output from the equalizing amplifier on the basis of a retiming signal. The retiming signal is generated by a comparator that compares an output signal from a timing signal extraction circuit with a reference voltage output from a reference voltage generation circuit, and supplies the retiming signal to the regenerating circuit. The reference voltage is generated by a reference voltage generation circuit in accordance with a variation in ambient temperature. A timing signal extraction circuit constituted by a waveform shaping circuit, a SAW filter and a limiter amplifier, extracts the timing signal from the data. The comparator outputs the retiming signal in accordance with the timing signal output from the timing signal extraction circuit. The duty ratio of the retiming signal output from the comparator depends on the reference voltage output from the reference voltage generation circuit. The reference voltage generation circuit generates a reference voltage having temperature characteristics and outputs it to the comparator. Therefore, the duty ratio of the clock pulse, i.e., the retiming signal output from the comparator, is controlled by the temperature. The timing signal output from the timing signal extraction circuit is output as the retiming signal which has undergone compensation for the phase variation due to the ambient temperature. To set the reference voltage, phase variations of the timing signal at some temperature points are measured, and the values of a thermister and resistors are set to suppress the variations.

It is the object of the present invention to provide a bit-rate-independent optical receiver capable of easily achieving a centralization and modularization thereof.

This object is solved by the subject matter of the independent claim.

Preferred embodiments are defined by the dependent claims.

In accordance with one aspect, the present invention provides a bit-rate-independent optical receiver comprising:
a bit rate sensing unit for outputting a photosensitive signal optoelectrically converted from an input optical signal while outputting a bit rate sensing signal having a voltage level indicative of a bit rate of the photosensitive signal;
a variation sensing unit for outputting a variation sensing signal when a variation in the bit rate occurs;
a temperature sensing unit for sensing an internal temperature of the bit rate sensing unit, and outputting a temperature sensing signal indicative of the sensed internal temperature;
a signal reproducing unit for reproducing data and clocks of the photosensitive signal based on a predetermined reference clock while, in response to a reception of a clock correction signal, reproducing the data and clocks of the photosensitive signal based on a reference clock corresponding to the clock correction signal; and
a control unit for calculating the bit rate of the photosensitive signal based on the voltage level of the bit rate sensing signal, in response to a reception of the variation sensing signal, compensating the calculated bit rate for errors resulting from a variation in temperature, based on the temperature indicated by the temperature sensing signal, and outputting, to the signal reproducing unit, a clock correction signal indicative of the temperature-compensated bit rate.

In accordance with another aspect, the present invention provides a bit-rate-independent optical receiver comprising:
a plurality of bit rate sensing units each for outputting a photosensitive signal optoelectrically converted from an input optical signal while outputting a bit rate sensing signal having a voltage level indicative of a bit rate of the photosensitive signal;
a plurality of variation sensing units respectively coupled to the bit rate sensing units, each of the variation sensing units serving to output a variation sensing signal when an associated one of the photosensitive signals exhibits a variation in bit rate;
a plurality of temperature sensing units respectively coupled to the bit rate sensing units, each of the temperature sensing units serving to sense an internal temperature of an associated one of the bit rate sensing units, and to output a temperature sensing signal indicative of the sensed internal temperature;
a plurality of signal reproducing units each for reproducing data and clocks of the photosensitive signal, outputted from an associated one of the bit rate sensing units, based on a predetermined reference clock while, in response to a reception of a clock correction signal, reproducing the data and clocks of the photosensitive signal based on a reference clock corresponding to the clock correction signal; and
a control unit for, in response to outputting of the variation sensing signal, determining the bit rate sensing unit associated with the outputting of the variation sensing signal, calculating the bit rate of an associated one of the photosensitive signals based on the voltage level of the bit rate sensing signal outputted from the determined bit rate sensing unit, compensating the calculated bit rate for errors resulting from a variation in temperature, based on the temperature indicated by an associated one of the temperature sensing signals, and outputting, to the signal reproducing unit associated with the determined bit rate sensing unit, a clock correction signal indicative of the temperature-compensated bit rate.

The above object and advantages of the present invention will become more apparent by describing in detail preferred embodiments thereof with reference to the attached drawings in which:
Fig. 1 is a block diagram illustrating a conventional bit-rate-independent optical receiver;
Fig. 2 is a block diagram illustrating a bit rate sensing unit shown in Fig. 1;
Fig. 3 is a block diagram illustrating the configuration of a bit-rate-independent optical receiver according to a preferred embodiment of the present invention;
Fig. 4 is a block diagram illustrating the bit rate sensing unit shown in Fig. 3; and
Fig. 5 is a block diagram illustrating a bit-rate-independent optical receiver according to another embodiment of the present invention.

Now, preferred embodiments of the present invention will be described in detail, with reference to the annexed drawings. In the following description, a variety of specific elements such as constituent elements are described. The description of such elements has been made only for a better understanding of the present invention. Those skilled in the art will appreciate that various modifications, additions, and substitutions to the specific elements are possible.

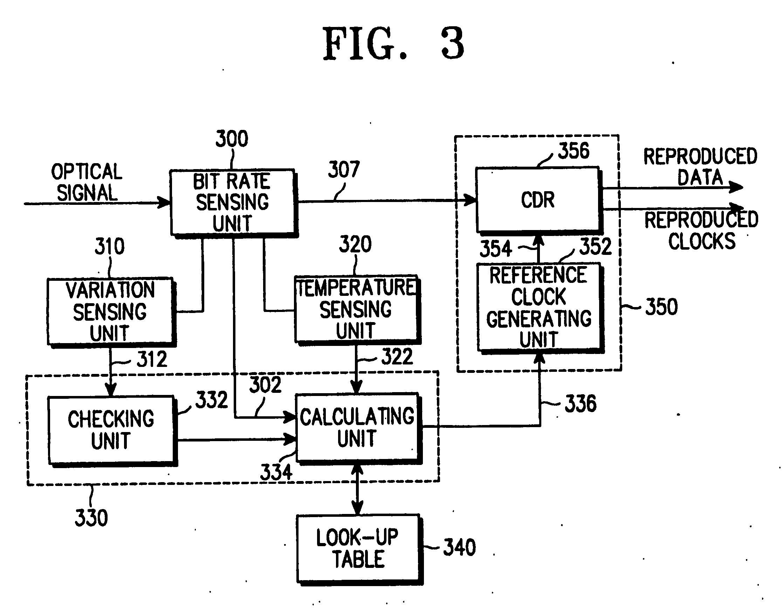

Fig. 3 is a block diagram illustrating the configuration of a bit-rate-independent optical receiver according to a preferred embodiment of the present invention. As shown in Fig. 3, the optical receiver includes a bit rate sensing unit 300, a variation sensing unit 310, a temperature sensing unit 320, a signal reproducing unit 350, and a control unit 330.

The bit rate sensing unit 300 outputs a photosensitive signal 307 optoelectrically converted from an input optical signal. The bit rate sensing unit 300 also outputs a bit rate sensing signal 302 having a voltage level indicative of the bit rate of the photosensitive signal 307.

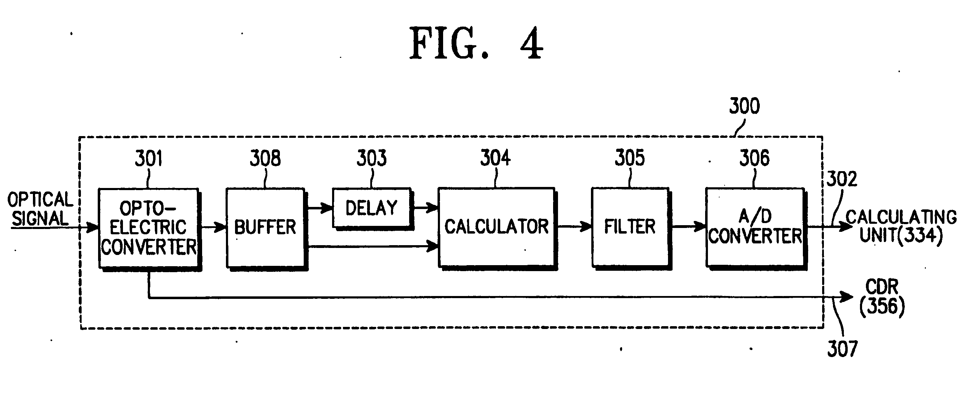

Fig. 4 is a block diagram illustrating the bit rate sensing unit 300. As shown in Fig. 4, the bit rate sensing unit 300 includes an optoelectric converter 301, a buffer 308, a delay 303, a calculator 304, a filter 305, and an A/D converter 306. Since the operation of such a bit rate sensing unit has been described in conjunction with Figs. 1 and 2, no description will be given of the operation of the bit rate sensing unit 300.

When the variation sensing unit 310 senses a variation in the bit rate of an input optical signal, it generates a variation sensing signal 312. That is, the variation sensing unit 310 compares a bit rate sensing signal, outputted just before the bit rate variation, with a bit rate sensing signal 302 outputted after the bit rate variation. Based on the result of the comparison, the variation sensing unit 310 outputs a variation sensing signal 312 indicative of the bit rate variation. The variation sensing unit 310 may be a variation amplifier having a feedback configuration or a PLL (Phase Locked Loop) circuit. This variation sensing unit 310 uses, as a reference input thereof, the bit rate sensing signal outputted just before a variation in bit rate occurs. The reference input is continuously updated with the lapse of time. The variation sensing unit 310 compares a bit rate sensing signal 302, generated after the bit rate variation, with the reference input, thereby outputting a variation sensing signal 312 indicative of the bit rate variation. In terms of time, the reference input precedes the bit rate sensing signal 302 generated after the bit rate variation.

The temperature sensing unit 320 senses the internal temperature of the bit rate sensing unit 300, and outputs a temperature sensing signal 322 indicative of the sensed internal temperature.

The signal reproducing unit 350 includes a reference clock generating unit 352 and a CDR 356. The reference clock generating unit 352 generates a predetermined reference clock while generating a reference clock 354 corresponding to a clock correction signal 336 when it receives the clock correction signal 336. That is, the signal reproducing unit 350 generates the predetermined reference clock where there is no variation in the bit rate of the photosensitive signal 307. On the other hand, when the clock correction signal 336 indicative of a variation in bit rate is inputted, the signal reproducing unit 350 generates the reference clock 354 corresponding to the clock correction signal 336.

The CDR 356 produces data and clocks of the photosensitive signal 307, based on the reference clock 354.

The control unit 330 includes a checking unit 332 and a calculating unit 334. The checking unit 332 periodically checks whether or not the variation sensing signal 312 is received. When the checking unit 332 detects a reception of the variation sensing signal 312, it informs the calculating unit 334 of the reception of the variation sensing signal 312.

When the variation sensing signal 312 is received, the calculating unit 334 calculates the bit rate of the photosensitive signal 307, based on the voltage level of the bit rate sensing signal 302. Thereafter, the calculating unit 334 compensates the calculated bit rate for errors resulting from a variation in temperature, based on the temperature indicated by the temperature sensing signal 322, and outputs, to the reference clock generating unit 352, a clock correction signal 336 indicative of the temperature-compensated bit rate. For the calculation of the temperature-compensated bit rate, the calculating unit 334 reads out an associated temperature-dependent bit rate error from a look-up table 340. The calculating unit 334 then compensates the calculated bit rate for the read error, thereby calculating a temperature-compensated bit rate. The clock correction signal 336 indicative of the temperature-compensated bit rate may also be used as a reference input of the variation sensing unit 310.

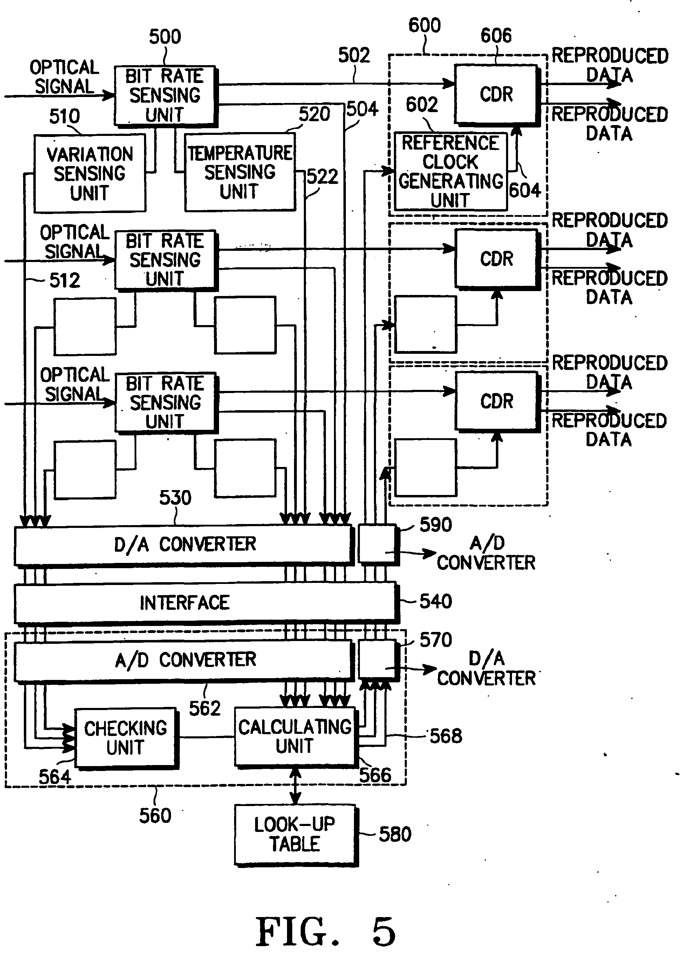

Fig. 5 is a block diagram illustrating a bit-rate-independent optical receiver according to another embodiment of the present invention. As shown in Fig. 5, the optical receiver includes a plurality of bit rate sensing units 500, a plurality of variation sensing units 510, a plurality of temperature sensing units 520, a plurality of signal reproducing units 600, a D/A converter 530, an interface 540, a control unit 560, and an A/D converter 590.

Each bit rate sensing unit 500 outputs a photosensitive signal 502 optoelectrically converted from an input optical signal. Each bit rate sensing unit 500 also outputs a bit rate sensing signal 504 having a voltage level indicative of the bit rate of the photosensitive signal 502. The configuration of each bit rate sensing unit 500 is illustrated in Fig. 4.

Each variation sensing unit 510 is coupled to an associated one of the bit rate sensing unit 500. When one of the variation sensing units 510 senses a variation in the bit rate of a photosensitive signal 502 associated therewith, it generates a variation sensing signal 512.

Each temperature sensing unit 520 is coupled to an associated one of the bit rate sensing units 500 and adapted to sense the internal temperature of the associated bit rate sensing unit 500, and to output a temperature sensing signal 522 indicative of the sensed internal temperature.

Each signal reproducing unit 600 reproduces data and clocks of the photosensitive signal 502 outputted from an associated one of the bit rate sensing units 500, based on a reference clock predetermined for the signal reproducing unit 600. When the clock correction signal 568 is received, the signal reproducing unit 600 reproduces data and clocks of the photosensitive signal 502 corresponding to the received clock correction signal 568.

The D/A converter 530 converts the bit rate sensing signal 504 outputted from each bit rate sensing unit 500 and the variation sensing signal 512 outputted from each variation sensing unit 510 into analog signals, respectively.

The interface 540 transfers, to the control unit 560, the bit rate sensing signal 504 outputted from each bit rate sensing unit 500, the variation sensing signal 512 outputted from each variation sensing unit 510, and the temperature sensing signal 522 outputted from each temperature sensing unit 520. The interface 540 also transfers each clock correction signal 568 outputted from the control unit 560 to an associated one of the signal reproducing units 600. That is, the interface 540 serves as a transfer medium for input/output signals associated with the control unit 560 in the bit-rate-independent optical receiver.

The control unit 560 includes an A/D converter 562, a checking unit 564, a calculating unit 566, and a D/A converter 570.

The A/D converter 562 converts analog signals, received via the interface 540, into digital signals, respectively.

The checking unit 564 checks outputting of a variation sensing signal 512 and the bit rate sensing unit 500 associated with the outputting of the variation sensing signal 512, and informs the calculating unit 566 of the results of the checking operation. When a variation sensing signal 512 is outputted, the calculating unit 566 calculates the bit rate of the photosensitive signal 502 associated with the variation sensing signal 512, based on the voltage level of the bit rate sensing signal 504 outputted from the checked bit rate sensing unit 500. Thereafter, the calculating unit 566 compensates the calculated bit rate for errors resulting from a variation in temperature, based on the temperature indicated by the temperature sensing signal 522 outputted from an associated one of the associated temperature sensing units 520. The calculating unit 566 then outputs a clock correction signal 568 indicative of the temperature-compensated bit rate. For the calculation of the temperature-compensated bit rate, the calculating unit 566 reads out an associated temperature-dependent bit rate error from a look-up table 580. The calculating unit 566 then compensates the calculated bit rate for the read error, thereby calculating a temperature-compensated bit rate.

The D/A converter 570 converts the clock correction signal 568 into an analog signal. This analog clock correction signal 568 is applied to the A/D converter 590 via the interface 540. The A/D converter 590 converts the clock correction signal 568 into a digital signal which is, in turn, sent to a reference clock generating unit 602 included in an associated one of the signal reproducing units 600.

As apparent from the above description, the bit-rate-independent optical receiver of the present invention has advantages of an easy centralized control and an easy modularization in that the control unit thereof is separated from other elements.

By virtue of the easy centralized control and modulization, the bit-rate-independent optical receiver also has advantage in that an addition or removal of bit rate sensing units is possible.

## Claims

1. A bit-rate-independent optical receiver comprising:
a bit rate sensing unit (300) for outputting a photosensitive signal (307) optoelectrically converted from an input optical signal while outputting a bit rate sensing signal (302) having a voltage level indicative of a bit rate of the photosensitive signal;
a variation sensing unit (310) for outputting a variation sensing signal (312) when a variation in the bit rate occurs in accordance with a protocol using a bit rate different from a previously set bit rate;
a temperature sensing unit (320) for sensing an internal temperature of the bit rate sensing unit (300), and outputting a temperature sensing signal (322) indicative of the sensed internal temperature;
a signal reproducing unit (350) for reproducing data and clocks of the photosensitive signal (307) based on a previously determined reference clock (354) while, in response to a reception of a clock correction signal (336), reproducing the data and clocks of the photosensitive signal based on a currently determined reference clock (354) corresponding to the clock correction signal; and
a control unit (330) for calculating the bit rate of the photosensitive signal (307) based on the voltage level of the bit rate sensing signal (302), in response to a reception of the variation sensing signal (312), compensating the calculated bit rate for errors resulting from a variation in temperature, based on the temperature indicated by the temperature sensing signal (332), and outputting, to the signal reproducing unit (350), a clock correction signal (336) indicative of the temperature-compensated bit rate.

2. The bit-rate-independent optical receiver according to claim 1, wherein for the calculation of the temperature-compensated bit rate, the control unit (330) is adapted to read out an associated temperature-dependent bit rate error from a look-up table (340), and to compensate the calculated bit rate for the read error, thereby calculating the temperature-compensated bit rate.

3. The bit-rate-independent optical receiver according to claim 1 or 2, comprising:
a plurality of bit rate sensing units (500);
a plurality of variation sensing units (510) respectively coupled to the bit rate sensing units;
a plurality of temperature sensing units (520) respectively coupled to the bit rate sensing units; and
a plurality of signal reproducing units (600),
wherein the control unit (560) is adapted to, in response to outputting of the variation sensing signal (512), determine the bit rate sensing unit associated with the outputting of the variation sensing signal.

4. The bit-rate-independent optical receiver according to claim 3, further comprising:
an interface (540) which is adapted to serve as a transfer medium for input and output signals associated with the control unit.

## Patentansprüche

1. Bitratenunabhängiger optischer Empfänger, der umfasst:
eine Bitraten-Erfassungseinheit (300), die ein Photoempfindlichkeits-Signal (307) ausgibt, das optoelektrisch aus einem eingegebenen optischen Signal umgewandelt wird, und gleichzeitig ein Bitraten-Erfassungssignal (302) ausgibt, das einen Spannungspegel hat, der eine Bitrate des Photoempfindlichkeits-Signals anzeigt;
eine Änderungs-Erfassungseinheit (310), die ein Änderungs-Erfassungssignal (312) ausgibt, wenn es zu einer Änderung der Bitrate entsprechend einem Protokoll kommt, das eine Bitrate verwendet, die sich von einer zuvor eingestellten Bitrate unterscheidet;
eine Temperatur-Erfassungseinheit (320), die eine Innen-Temperatur der Bitraten-Erfassungseinheit (300) erfasst und ein Temperatur-Erfassungssignal (322) ausgibt, das die erfasste Innentemperatur anzeigt;
eine Signalwiedergabeeinheit (350), die Daten und Takte des Photoempfindlichkeits-Signals (307) auf Basis eines zuvor bestimmten Bezugstaktes (354) wiedergibt und gleichzeitig in Reaktion auf einen Empfang eines Taktkorrektursignals (336) die Daten und Takte des Photoempfindlichkeits-Signals auf Basis eines aktuell bestimmten Bezugstaktes (354) dem Taktkorrektursignal entsprechend wiedergibt; und
eine Steuereinheit (330), die die Bitrate des Photoempfindlichkeits-Signals (307) auf Basis des Spannungspegels des Bitraten-Erfassungssignals (302) in Reaktion auf einen Empfang des Änderungs-Erfassungssignals (312) berechnet, Fehler der berechneten Bitrate, die aus einer Temperaturänderung resultieren, auf Basis der durch das Temperatur-Erfassungssignal (332) angezeigten Temperatur kompensiert und an die Signalwiedergabeeinheit (350) ein Taktkorrektursignal (336) ausgibt, das die temperaturkompensierte Bitrate anzeigt.

2. Bitratenunabhängiger optischer Empfänger nach Anspruch 1, wobei für die Berechnung der temperaturkompensierten Bitrate die Steuereinheit (330) so eingerichtet ist, dass sie aus einer Nachschlagetabelle (340) einen dazugehörigen temperaturabhängigen Bitratenfehler ausliest und den Lesefehler der berechneten Bitrate kompensiert, um so die temperaturkompensierte Bitrate zu berechnen.

3. Bitratenunabhängiger optischer Empfänger nach Anspruch 1 oder 2, der umfasst:
eine Vielzahl von Bitraten-Erfassungseinheiten (500);
eine Vielzahl von Änderungs-Erfassungseinheiten (510), die jeweils mit den Bitraten-Erfassungseinheiten gekoppelt sind;
eine Vielzahl von Temperatur-Erfassungseinheiten (520), die jeweils mit den Bitraten-Erfassungseinheiten gekoppelt sind; und
eine Vielzahl von Signalwiedergabeeinheiten (600),
wobei die Steuereinheit (560) so eingerichtet ist, dass sie in Reaktion auf Ausgeben des Änderungs-Erfassungssignals (512), die mit dem Ausgeben des Änderungs-Erfassungssignals zusammenhängende Bitraten-Erfassungseinheit bestimmt.

4. Bitratenunabhängiger optischer Empfänger nach Anspruch 3, der des Weiteren umfasst:
eine Schnittstelle (540), die so eingerichtet ist, dass sie als ein Übertragungsmedium für mit der Schnittstelle zusammenhängende Eingangs- und Ausgangssignale dient.

## Revendications

1. Récepteur optique indépendant du débit binaire, comprenant :
une unité de détection de débit binaire (300) pour délivrer un signal photosensible (307) converti optoélectriquement à partir d'un signal optique d'entrée tout en délivrant un signal de détection de débit binaire (302) ayant un niveau de tension représentatif d'un débit binaire du signal photosensible ;
une unité de détection de variation (310) pour délivrer un signal de détection de variation (312) lorsqu'une variation du débit binaire se produit en conformité avec un protocole utilisant un débit binaire différent d'un débit binaire réglé antérieurement ;
une unité de détection de température (320) pour détecter une température interne de l'unité de détection de débit binaire (300), et pour délivrer un signal de détection de température (322) représentatif de la température interne détectée ;
une unité de reproduction de signal (350) pour reproduire des données et des horloges du signal photosensible (307) sur la base d'une horloge de référence déterminée antérieurement (354) tout en reproduisant, en réponse à la réception d'un signal de correction d'horloge (336), les données et les horloges du signal photosensible sur la base d'une horloge de référence (354) déterminée à l'instant courant correspondant au signal de correction d'horloge ; et
une unité de commande (330) pour calculer le débit binaire du signal photosensible (307) sur la base du niveau de tension du signal de détection de débit binaire (302), en réponse à une réception du signal de détection de variation (312), compenser des erreurs affectant le débit binaire calculé, résultant d'une variation de température, sur la base de la température indiquée par le signal de détection de température (332), et délivrer à l'unité de reproduction de signal (350) un signal de correction d'horloge (336) représentatif du débit binaire soumis à une compensation en fonction de la température.

2. Récepteur optique indépendant du débit binaire selon la revendication 1, dans lequel, pour calculer le débit binaire soumis à une compensation en fonction de la température, l'unité de commande (330) est conçue pour lire une erreur de débit binaire dépendant de la température associée dans une table de consultation (340), et pour compenser le débit binaire calculé en fonction de l'erreur lue, afin de calculer ainsi le débit binaire soumis à une compensation en fonction de la température.

3. Récepteur optique indépendant du débit binaire selon la revendication 1 ou 2, comprenant :
une pluralité d'unités de détection de débit binaire (500) ;
une pluralité d'unités de détection de variation (510) respectivement reliées aux unités de détection de débit binaire ;
une pluralité d'unités de détection de température (520) respectivement reliées aux unités de détection de débit binaire ; et
une pluralité d'unités de reproduction de signal (600),
dans lequel l'unité de commande (560) est conçue pour déterminer, en réponse à la sortie du signal de détection de variation (512), le débit binaire de l'unité de détection associé à la sortie du signal de détection de variation.

4. Récepteur optique indépendant du débit binaire selon la revendication 3, comprenant en outre :
une interface (540) qui sert de support de transfert pour des signaux d'entrée et de sortie associés à l'unité de commande.
